Europäisches Patentamt

European Patent Office

Office européen des brevets

(11) Veröffentlichungsnummer : **0 154 327 B1**

## (12) EUROPÄISCHE PATENTSCHRIFT

(45) Veröffentlichungstag der Patentschrift :
09.09.87

(51) Int. Cl.⁴ : **B 65 G 35/00, G 01 S 5/00**

(21) Anmeldenummer : **85102462.0**

(22) Anmeldetag : **05.03.85**

(54) Gleisloses Flurfördersystem.

(30) Priorität : 09.03.84 DE 3408720

(43) Veröffentlichungstag der Anmeldung :
11.09.85 Patentblatt 85/37

(45) Bekanntmachung des Hinweises auf die Patenterteilung : 09.09.87 Patentblatt 87/37

(84) Benannte Vertragsstaaten :
**CH FR GB IT LI**

(56) Entgegenhaltungen :
**CH-A- 560 149
DE-A- 2 460 645
DE-A- 2 853 317
GB-A- 1 582 415**

(73) Patentinhaber : **MAHO Aktiengesellschaft
Postfach 1280
D-8962 Pfronten (DE)**

(72) Erfinder : **Babel, Werner
Achweg 19
D-8962 Pfronten-Meilingen (DE)**

(74) Vertreter : **Patentanwälte Beetz sen. - Beetz jun.
Timpe - Siegfried - Schmitt-Fumian
Steinsdorfstrasse 10
D-8000 München 22 (DE)**

**Beschreibung**

Die Erfindung betrifft ein gleisloses Flurfördersystem entsprechend dem Oberbegriff der Ansprüche 1 und 3 (bekannt aus CH-A-56-0 149), insbesondere für den selbsttätig gesteuerten Stückguttransport in Hallen, bestehend aus führerlosen Motorfahrzeugen mit je einem Lenkantrieb, einem Empfänger und einer Steuereinrichtung, welche die empfangenen Leitsignale in Steuersignale für den Lenk- und Fahrantrieb des Motorfahrzeugs umsetzt, und aus einem ortsfest installierten Leitsystem zur Erzeugung und Aussendung der Leitsignale.

Für den Stückguttransport in beispielsweise Produktions- oder Montagehallen sind verschiedene Flurfördersysteme bekannt, die entweder aus gleisgebundenen oder gleislosen selbstfahrenden Flurförderzeugen, wie gelenkte Elektro- oder Dieselwagen, oder aus Stetigförderern bestehen. Manuell gelenkte Fahrzeuge haben den Vorteil einer nahezu unbeschränkten Einsatzmöglichkeit für unterschiedlichste Transportaufgaben, benötigen jedoch jeweils einen Fahrer. Stetigförderer dagegen können für größte Förderleistungen ausgelegt werden, sind jedoch an die durch die Förderanlage selbst vorgegebenen Transportbahnen gebunden.

Aus der CH-A-560 149 ist bereits ein gleisloses Flurfördersystem bekannt, bei dem unterhalb der vorgegebenen Fahrwege Induktionsleitungen verlegt sind. Jedes Motorfahrzeug weist eine elektronische Steuerung auf, welche die von den Induktionsleitungen kontinuierlich abgestrahlten Leitsignale erfaßt und in Steuersignale zur Betätigung des jeweiligen Fahr- und Lenkantriebes umsetzt. Vor jeder Weiche ist die Induktionsleitung auf einer bestimmten Länge unterbrochen oder markiert, wobei diese Länge den Code der jeweiligen Weiche angibt. Jede fahrzeugeigene Steuereinrichtung enthält eine Längenmeßvorrichtung, aus deren Meßdaten der jeweilige Weichencode von der elektronischen Steuereinrichtung bestimmt wird. Ähnlich wie bei gleisgebundenen Fördersystemen haftet auch diesem automatischen Fördersystem der Nachteil an, daß die Induktionsschleifen und -leitungen in dem meist aus Beton oder Asphalt bestehenden Boden fest verlegt sein müssen, so daß damit die Fahrbahnen vorgegeben sind und nicht ohne weiteres geändert werden können. Insbesondere in Produktions- und Montagehallen für die Einzel- bzw. Kleinserienfertigung ist dieses Flurfördersystem nahezu unbrauchbar, weil die Fahrbahnen für die zu transportierenden Stückgüter relativ häufig durch Wechsel der Betriebspunkte, Aufstellen bzw. Umstellung von Fertigungseinheiten usw. geändert werden müssen. Darüber hinaus erfordert die Verlegung der Induktionsschleifen im Hallenboden bzw. im Fundament aufwendige Bauarbeiten, die den laufenden Produktionsbetrieb empfindlich stören.

Aufgabe der Erfindung ist es, ein gleisloses Flurfördersystem zu schaffen, bei dem die einzelnen Fahrzeuge auf beliebig wählbaren Bahnen fahren können.

Eine erste Lösung dieser Aufgabe besteht darin, daß das Leitsystem mehrere über Flur angeordnete Sender enthält und daß jede Steuereinrichtung einen frei programmierbaren Rechner aufweist, welche die Raumkoordinaten der von mindestens zwei Sendern empfangenen Leitsignale bestimmt und aus diesen durch Vergleich mit gespeicherten Koordinaten-Werten die Steuersignale für den jeweiligen Fahr- und Lenkantrieb seines Fahrzeugs erzeugt.

Die Sender sind so hoch ortsfest positioniert, daß ihre z. B. als elektromagnetische Wellen, Licht od. dgl. ausgestrahlten Signale von den auf dem Fahrzeug montierten Empfängern in jedem Punkt der Fahrzeugbahn aufgenommen und registriert werden können. Der mit den Empfängern gekoppelte Rechner bestimmt über die Raumwinkel der empfangenen Signale die augenblickliche Position des Fahrzeugs. Auf der Grundlage von eingespeicherten Daten über die vom Fahrzeug zurückzulegende Fahrbahn werden Steuersignale erzeugt, welche die Lenkantriebe und ggf. die Fahrzeugmotoren entsprechend betätigen, um das Fahrzeug entsprechend der vorgegebenen eingespeicherten Fahrbahn zu lenken.

Zweckmäßig sind die Sender in einer solchen Höhe und Position ortsfest installiert, daß ihre Signale von den auf dem jeweiligen Fahrzeug montierten Empfängern jederzeit erfaßt und nicht durch Bauten, Maschinen od. dgl. abgeschirmt werden können. Die auf dem jeweiligen Fahrzeug montierten Empfänger registrieren fortlaufend die Signale von mindestens zwei Sendern und leiten sie dem Rechner zu, der die Raumwinkel der ankommenden Signale bestimmt. Im Rechner sind die die gewünschte Fahrbahn kennzeichnenden Raumwinkel-Daten gespeichert. Durch Vergleich der Raumwinkel-Daten der von den Empfängern erfaßten Signale mit den gespeicherten Soll-Daten wird im Rechner die augenblickliche Position des Fahrzeugs bestimmt. Anhand der gespeicherten Soll-Daten erzeugt der Rechner ferner Steuersignale für den Fahrzeugantrieb und den Lenkantrieb, die entsprechend betätigt werden, so daß das Fahrzeug genau auf der vorbestimmten Fahrbahn fährt und an vorgegebenen Stellen anhält. Durch Rückkopplung und ggf. intermittierendes Erfassen der Signale eines dritten ortsfesten Senders können Kontrollen der jeweiligen Fahrzeugpositionen durchgeführt und ggf. festgestellte Fehler durch entsprechenden Betrieb der Lenkantriebe korrigiert werden. Bei dieser Ausführung besitzt jedes Fahrzeug einen eigenen Rechner, was u. U. einen unerwünscht großen Investitionsaufwand und die Integrierung des erfindungsgemäßen Fördersystems in einen programmgesteuerten vollautomatischen Betriebsablauf erschwert.

Eine weitere Lösung der Erfindungsaufgabe zeichnet sich dadurch aus, daß auf jedem Fahrzeug ein Sender und ein Empfänger installiert ist und daß das Leitsystem mindestens einen Empfänger und einen Sender aufweist, die über Flur angeordnet und über Signalleitungen mit einem zentralen frei programmierbaren Rechner gekoppelt sind, welcher auf der Grundlage von gespeicherten Fahrspur-Daten Steuersignale für die Fahr- und Lenkantriebe des jeweiligen Fahrzeugs erzeugt, welche von dem Sender als Leitsignale den fahrzeuggebundenen Empfängern zugeführt werden.

Die von jedem fahrzeuggebundenen Sender ausgestrahlten Signale werden fortlaufend von mindestens zwei der vorzugsweise unter dem Hallendach montierten Empfänger erfaßt und dem zentralen Rechner zugeführt, der auf der Grundlage der Raumwinkel dieser Signale und gespeicherten Solldaten die jeweilige Fahrzeugposition bestimmt und Steuersignale erzeugt, die vom ortsfest z. B. unter dem Hallendach installierten Sender den fahrzeugeigenen Empfängern über Funk zugeführt werden. Falls mehrere Fahrzeuge im Einsatz sind, kann jeder Sender mit einem individuellen Signal-Code senden, so daß der Rechner die einzelnen Fahrzeuge unterscheiden kann. Der wesentliche Vorteil dieser Ausführung liegt in der Verwendung eines ggf. auch für andere Zwecke bereits vorhandenen zentralen Rechners. Falls auch die Be- und Entladevorgänge automatisiert sind, kann der Ablauf auch dieser Operationen im zentralen Rechner gespeichert sein, was dann zu einem vollautomatisierten Handhabungs- und Transportsystem ohne manuelle Eingriffe mit nur einem Rechner führt.

Damit Halleneinbauten, wie z. B. Zwischenwände, Säulen, Maschinen od. dgl., den Signalempfang nicht stören bzw. unterbrechen können, empfiehlt es sich, die stationären Teile des Fördersystems, d. h. entweder die Sender oder die Empfänger, an der Hallendecke, und zwar bevorzugt in einem bestimmten Raster, zu installieren. In diesem Fall werden nur die Signale der dem Fahrzeug jeweils nächstliegenden beiden — bzw. drei — Sender oder Empfänger ausgewertet und sobald das Fahrzeug in den Strahlungsbereich der auf der Fahrbahn folgenden Sender gelangt, wird auf diese umgeschaltet. Diese Ausführung hat den weiteren Vorteil, daß aufgrund der kurzen Strahlungswege die durch andere Einflüsse hervorgerufene Abnahme der Strahlungsenergie und andere Störeinflüsse praktisch keine Rolle spielen.

Der besondere Vorzug des erfindungsgemäßen Flurfördersystems liegt in der freien Wahl der verschiedenen Fahrbahnen, ohne daß besonders aufwendige Baumaßnahmen getroffen werden müßten, wie sie beispielsweise bei Verwendung von Induktionsschleifen notwendig sind. Der Erhalt und die Einspeicherung der Sollwert-Daten in den Rechner kann beispielsweise nach dem sog. Lern-Prinzip erfolgen, wobei das Fahrzeug erstmals die neu gewählte Fahrbahn manuell gesteuert abfährt und dabei die entsprechenden Daten erfaßt und eingespeichert werden.

Um beispielsweise Zusammenstöße mit ihren in der vorprogrammierten Fahrbahn ggf. unbeabsichtigt abgelegten Gegenständen zu vermeiden, kann jedes Fahrzeug zusätzlich mit mechanischen Tastern oder mit optischen, akustischen bzw. elektromagnetischen Sensoren ausgerüstet werden, die einen dem Steuerkreis übergeordneten Abschaltkreis aktivieren, sobald vorgegebene Mindestabstände zwischen dem Fahrzeug und dem Gegenstand unterschritten sind.

Im folgenden werden Ausführungsbeispiele der Erfindung anhand der Schemazeichnung im einzelnen beschrieben. Es zeigen :

Figur 1 in Draufsicht ein Flurfördersystem mit ortsfesten Sendern und am jeweiligen Fahrzeug installierten Empfängern mit Rechner ;

Figur 2 ein Flurfördersystem mit am Fahrzeug installierten Sendern und ortsfesten Empfängern, die mit einem zentralen Rechner gekoppelt sind.

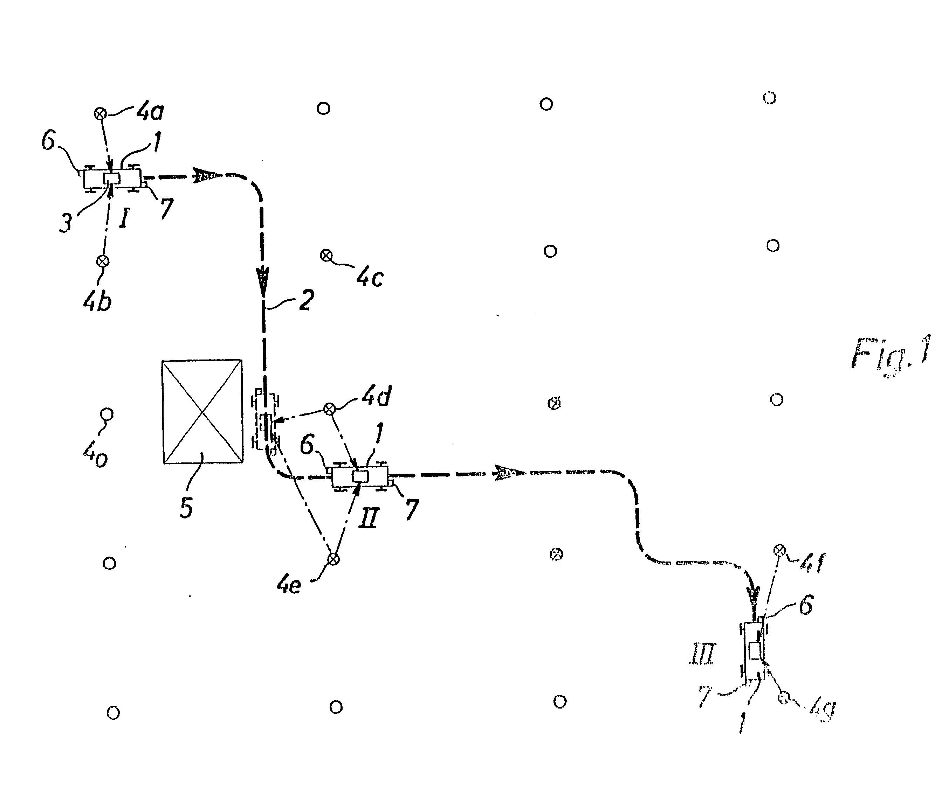

Bei dem in Fig. 1 dargestellten Flurfördersystem soll ein selbstfahrendes Fahrzeug 1 aus einer Beladestation I über eine Zwischenstation II, in der ent- oder beladen werden kann, in eine Endstation III entlang einer gestrichelt dargestellten Fahrbahn 2 ohne Lenker hin- und zurückfahren. Bei diesem Fahrzeug 1 kann es sich um Elektrokarren, Gabelstapler od. dgl. handeln. Auf dem Sender ist ein Empfänger 3 mit geeigneten Antennen sowie ein — nicht dargestellter — Rechner installiert. Daneben weist das Fahrzeug einen Fahrantrieb mit E-Motor oder Brennkraftmaschine sowie einen Lenkantrieb und vom Rechner angesteuerte Stellglieder zur Betätigung dieser Antriebe auf.

An der Hallendecke sind in einer Ebene eine Vielzahl von Sendern 4 in einem vorgegebenen Raster aufgehängt, die — je nach der Auslegung des Empfängers — Kugelwellen oder Richtstrahlen aussenden können.

Das erfindungsgemäße Führ- bzw. Leitverfahren funktioniert wie folgt :

In der Beladestation I empfängt der Sender 3 Signale von den beiden nächstliegenden Sendern 4a und 4b. Nach Erhalt des Startbefehls beginnt sich das Fahrzeug entlang der — gestrichelt eingezeichneten — Fahrbahn zu bewegen. Dabei werden fortlaufend Positionsbestimmungen aufgrund der sich ändernden Einfallwinkel der von den beiden Sendern 4a und 4b abgestrahlten Signale im Rechner ermittelt und mit den zuvor gespeicherten Soll-Werten für diese Einfallwinkel verglichen. Sobald Abweichungen der Ist-Werte von den Soll-Werten festgestellt werden, wird der Lenkantrieb in entsprechender Weise verstellt, so daß das Fahrzeug der Spur genau folgt. Auf gleiche Weise werden Lenkbewegungen zum Durchfahren von Kurven ausgeführt. Ab einem gewissen Punkt der Fahrspur ist die Entfernung zwischen dem Fahrzeug 1 und dem ersten Sender 4a größer als zum dritten Sender 4c. In diesem Moment wird entweder der Sender 4a abgeschaltet oder der Empfänger 3 schaltet auf den Sender 4c um, der dann die Leitfunktion für einen nächstfolgenden Fahrstreckenabschnitt übernimmt. Diese Umschaltung auf jeweils nächstliegende Sender setzt sich während der gesamten Fahrt fort, so daß das Fahrzeug stets die Signale der nächstliegenden Sender empfängt, was den Einfluß von Störimpulsen aus anderen Strahlungsquellen herabsetzt.

Falls sich im direkten Strahlengang zwischen einem Sender $4_0$ und dem Fahrzeug ein Hindernis 5, z. B. ein Bauelement oder eine Maschine, befindet, dann bietet das Rastersystem der Sender 4 die Möglichkeit, die außer dem abgeschirmten Sender $4_0$ nächstliegenden beiden Sender (in Fig. 1 4d und 4e) auszuwählen und ihre Signale entsprechend auszuwerten.

Um Kollisionen der einzelnen Fahrzeuge 1 mit Gegenständen oder anderen Hindernissen zu vermeiden, die unbeabsichtigt in der programmierten Fahrspur abgelegt worden sind, besitzt jeder Wagen zweckmäßig an seinen beiden Stirnseiten je einen Sensor 6, 7, die beispielsweise als elektromechanische Tastfühler ausgebildet sein können. Sobald diese mit dem in der Fahrspur befindlichen Gegenstand in Berührung gelangen, wird ein Abschaltimpuls für den Fahrantrieb und den Lenkantrieb erzeugt und das Fahrzeug durch automatisches Einrücken seiner Bremsen sofort stillgesetzt. Diese Sensoren 6, 7 können jedoch auch nach dem Echolot-Prinzip bzw. auf der Basis von elektromagnetischen Wellen arbeiten und das Fahrzeug durch Abschalten seiner Antriebe stillsetzen, sobald Mindestabstände zu ortsfesten Hindernissen unterschritten werden.

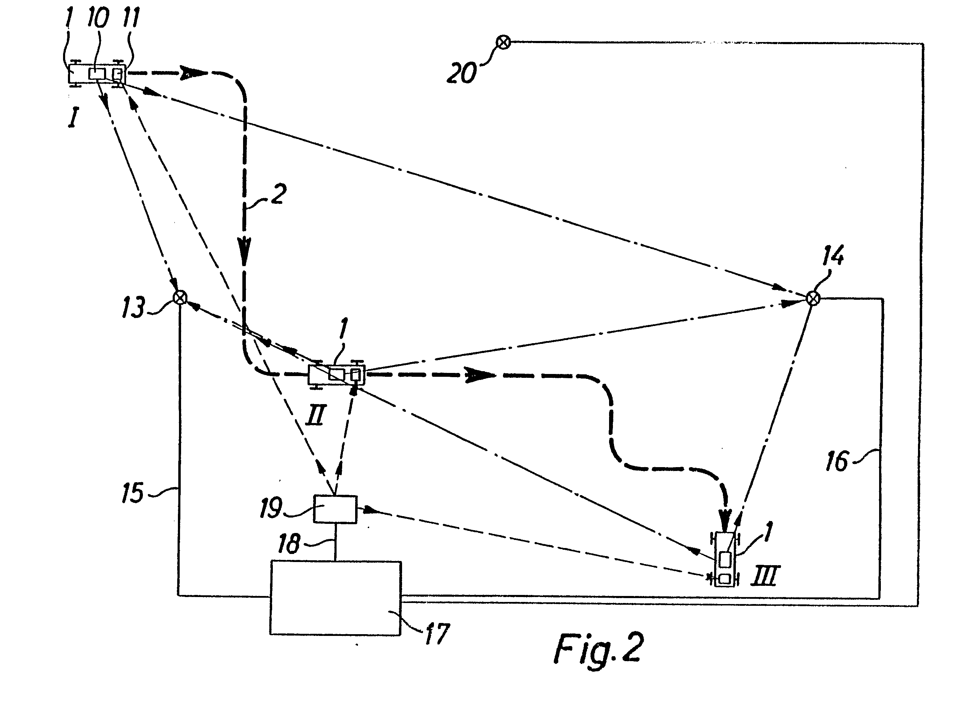

Bei dem in Fig. 2 dargestellten Ausführungsbeispiel des erfindungsgemäßen Transportsystems soll ein Wagen 1 mit Fahr- und Lenkantrieb ebenfalls aus einer Beladestation I über eine Zwischenstation II in eine Endstation III auf der vorprogrammierten Fahrspur 2 hin- und zurückfahren. Auf jedem Fahrzeug ist ein Sender 10 und ein Empfänger 11 installiert. Zwei überflur, z. B. unter der Hallendecke, ortsfest angeordnete Sender 13, 14 sind über Signalleitungen 15, 16 an einen Zentralrechner 17 angeschlossen, dessen Ausgang 18 zu einem Sender 19 führt.

Dieses System arbeitet wie folgt :

In der Ausgangsstation I beginnt nach Einschalten der Fahr- und Lenkantriebe die Fahrt des Fahrzeuges 1 auf der — stark gestrichelt dargestellten — Fahrspur 2. Gleichzeitig werden die vom Sender 10 fortlaufend ausgestrahlten Signale von den beiden Sendern 13, 14 empfangen und — ggf. nach geeigneter Modulation — dem Rechner 17 zugeführt, der als Teil des gesamten Steuersystems aller Transport-Handhabungs- und Arbeitsvorgänge des Betriebes an einen Zentralrechner angeschlossen oder aber selbst dieser Zentralrechner sein kann. In diesem Rechner 17 werden die über die Leitungen 15, 16 eingespeisten Signal-Impulse mit eingespeicherten Soll-Daten der einprogrammierten Fahrspur 2 verglichen. Sobald sich Differenzwerte zwischen den Ist-Daten und den Soll-Daten ergeben, werden über die Ausgangsleitung 18 und den Sender 19 Steuersignale zu dem auf dem Fahrzeug installierten Sender 11 gesendet, die entsprechende Stellglieder zur Betätigung der Fahr- und/oder Lenkantriebe aktivieren.

Um Fehlerquellen möglichst weitgehend auszuschalten, kann bei dieser Ausführung ein dritter Empfänger 20 vorgesehen sein, der jedoch nur in Intervallen aktiviert wird und dessen empfangene Signale im Rechner 17 zur Überprüfung der Positions-Daten ausgewertet werden oder dann als Leitsignale dienen, wenn der Strahlengang des Fahrzeugsenders 10 zu dem einen oder anderen Empfänger 13 oder 14 unterbrochen ist.

Die Sender 13, 14, 20 sollten zweckmäßig phasengleich miteinander gekoppelt sein, so daß das Leitsystem nach dem Prinzip der « LORAN »-Navigation (Interferenz-Messung) arbeitet. Selbstverständlich weisen auch bei der Ausführung nach Fig. 2 die einzelnen Fahrzeuge die anhand der Fig. 1 beschriebenen Sensoren 6, 7 auf.

Die Erfindung ist nicht auf die dargestellten Ausführungen beschränkt. Im Rahmen des Patentansprüche können je nach dem angewandten Leitprinzip Sender und darauf abgestimmte Empfänger der unterschiedlichsten Art verwendet werden.

## Patentansprüche

1. Gleisloses Flurfördersystem für den selbsttätig gesteuerten Stückguttransport, insbesondere in Hallen, bestehend aus führerlosen Motorfahrzeugen (1) mit je einem Lenkantrieb, einem Empfänger (3) und einer Steuereinrichtung, welche die empfangenen Leitsignale in Steuersignale für den Lenk- und Fahrantrieb des Motorfahrzeugs umsetzt, und aus einem ortsfest installierten Leitsystem (4) zur Erzeugung und Aussendung der Leitsignale, dadurch gekennzeichnet, daß das Leitsystem (4) mehrere über Flur angeordnete Sender (4a-4n) enthält und daß die Steuereinrichtung jedes Fahrzeugs (1) einen frei programmierbaren Rechner aufweist, welcher die Raumkoordinaten der von mindestens zwei Sendern (4a-4n) empfangenen Leitsignale bestimmt und aus ihnen durch Vergleich mit gespeicherten Koordinaten-Werten die Steuersignale für den Fahr- und Lenkantrieb des jeweiligen Fahrzeugs (1) erzeugt.

2. Flurfördersystem nach Anspruch 1, dadurch gekennzeichnet, daß die ortsfesten Sender (4a-4n) in einem vorgegebenen Raster montiert sind und daß die Steuereinrichtung jedes Fahrzeugs (1) eine Einheit aufweist, welche fortlaufend die Signale nur der beiden nächstliegenden Sender auswählt.

3. Gleisloses Flurfördersystem für den selbsttätig gesteuerten Stückguttransport, insbesondere in Hallen, bestehend aus führerlosen Motorfahrzeugen (1) mit je einem Lenkantrieb, einem Empfänger (3) und einer Steuereinrichtung, welche die empfangenen Leitsignale in Steuersignale für den Lenk- und Fahrantrieb des Motorfahrzeugs umsetzt, und aus einem ortsfest installierten Leitsystem (4) zur Erzeugung und Aussendung der Leitsignale, dadurch gekennzeichnet, daß auf jedem Fahrzeug (1) ein Sender (10) und ein Empfänger (11) installiert ist und daß das Leitsystem mindestens zwei Empfänger (13, 14) und einen Sender (19) aufweist, die über Flur angeordnet und über Signalleitungen (15, 16) mit einem zentralen frei programmierbaren Rechner (17) gekoppelt sind, welcher auf der Grundlage von gespeicherten Fahrspur-Daten Steuersignale für die Fahr- und Lenkantriebe des jeweiligen Fahrzeugs (1) erzeugt, welche von dem Sender (19) als Leitsignale den fahrzeuggebundenen Empfängern (11) zugeführt werden.

## Claims

1. A railless floor conveyor system, especially for the automatically controlled transport of unit loads in sheds, comprising driverless motor-driven trucks (1) each including a steering mechanism, a receiver (3) and control means for converting the received guide signals into control signals for the steering and travelling mechanism, and a fixedly installed guide system (4) for generating and transmitting the guide signals, characterised in that said guide system (4) comprises a plurality of floormounted transmitters (4a-4n), and that the control means of each truck (1) includes a freely programmable computer for determining the space coordinates of the guide signals received from at least two transmitters (4a-4n) and for producing therefrom, by comparison with stored coordinate values, the control signals for the travelling and steering mechanism of the respective truck (1).

2. A floor conveyor system as claimed in claim 1, characterised in that said stationary transmitters (4a-4n) are mounted in a predetermined grid pattern and that the control means of each truck (1) includes a unit for continuously selecting only the signals from the two most closely positioned transmitters.

3. A railless floor conveyor system, especially for the automatically controlled transport of unit loads in sheds, comprising driverless motor driven trucks (1) each including a steering mechanism, a receiver (3) and control means for converting the received guide signals into control signals for the steering and travelling mechanism of the motor driven truck, and a fixedly mounted guide system (4) for producing and transmitting the guide signals, characterised in that each truck (1) has mounted thereon a transmitter (10) and a receiver (11), and that said guide system includes at least two receivers (13, 14) and a transmitter (19) which are floor-mounted and coupled via signal lines (15, 16) to a freely programmable central computer (17) for producing, on the basis of stored travelling path data, control signals for the travelling and steering mechanisms of the respective truck (1), said control signals being delivered as guide signals from the transmitter (19) to the truck-bound receivers (11).

## Revendications

1. Système de transporteur au sol sans rails pour le transport de charges isolées à commande automatique, dans des halls en particulier, constitué par des véhicules motorisés (1) sans conducteur, comprenant chacun un entraînement de direction, un récepteur (3) et un dispositif de commande qui convertit les signaux de conduite reçus en signaux de commande des entraînements de direction et de roulement du véhicule motorisé, et par un système de conduite (4) fixe produisant et émettant les signaux de conduite, ledit système étant caractérisé en ce que le système de conduite (4) comporte plusieurs émetteurs (4a-4n) montés au-dessus du sol ; et le dispositif de commande de chaque véhicule (1) comprend un calculateur programmable qui détermine les coordonnées spatiales des signaux de conduite reçus de deux émetteurs (4a-4n) au moins puis délivre, en les comparant à des coordonnées mémorisées, les signaux de commande aux entraînements de roulement et de direction du véhicule (1) considéré.

2. Système de transporteur au sol selon revendication 1, caractérisé en ce que les émetteurs fixes (4a-4n) sont montés suivant une trame prédéterminée ; et le dispositif de commande de chaque véhicule (1) comporte une unité qui sélecte continûment les signaux des seuls deux émetteurs les plus proches.

3. Système de transporteur au sol sans rails pour le transport de charges isolées à commande automatique, dans des halls en particulier, constitué de véhicules motorisés (1) sans conducteur, comportant chacun un entraînement de direction, un récepteur (3) et un dispositif de commande qui convertit les signaux de conduite reçus en signaux de commande des entraînements de direction et de roulement du véhicule motorisé, et par un système de conduite (4) fixe produisant et émettant les signaux de conduite, ledit système étant caractérisé en ce qu'un émetteur (10) et un récepteur (11) sont montés sur chaque véhicule (1) ; et le système de conduite comporte au moins deux récepteurs (13, 14) et un émetteur (19) montés au-dessus du sol et reliés par des lignes de signal (15, 16) à un calculateur programmable central (17) qui, à l'aide des données mémorisées relatives à la voie, délivre aux entraînements de roulement et de direction du véhicule (1) considéré des signaux de commande que l'émetteur (19) transmet sous forme de signaux de conduite aux récepteurs (11) sur véhicule.

Fig. 1

Fig.2

0 154 327